# FASCICULE DE BREVET EUROPEEN

(11) **EP 1 655 817 B1**
(45) Date de publication et mention de la délivrance du brevet: **11.07.2012**
(21) Numéro de dépôt: 05023944.1
(22) Date de dépôt: 03.11.2005
(51) Int. Cl.: H02H 6/00

(54) **Actionneur muni de moyens de détermination de la température d'un moteur électrique**
Aktor mit Mittel zur Bestimmung der Temperatur eines Elektromotors
Actuator with means for determining the temperature of an electric motor

(30) Priorité: 09.11.2004 FR 0411930
(43) Date de publication de la demande: 10.05.2006
(73) Titulaire: Somfy SAS, 74300 Cluses (FR)
(72) Inventeur: Vanderschaeghe, Christian, 74700 Domancy (FR); Allain, Loïg, 74300 Cluses (FR); Bruno, Serge, 74460 Marnaz (FR)
(74) Mandataire: Bugnion Genève

(56) Documents cités:
- DE-A1- 3 422 485
- DE-A1- 19 710 890

## Description

L'invention concerne un actionneur selon le préambule de la revendication 1.

Il est devenu très courant d'intégrer, dans les éléments de fermeture, d'occultation et de protection solaire destinés au bâtiment (tels que les volets roulants et les stores), des actionneurs électriques permettant leur manoeuvre. Ces actionneurs peuvent comprendre un moteur à courant continu ou un moteur à courant alternatif. L'usage de moteurs à courant continu et, en particulier, à aimants permanents au stator, à rotor bobiné et à collecteur, est en général préféré pour des raisons de coût. Ce choix peut même être justifié lorsque la source de tension pour l'alimentation de ces moteurs est alternative, par exemple le réseau commercial alternatif 230V 50 Hz.

Cependant, un problème posé par ces moteurs réside dans la maîtrise de leur échauffement. En effet, l'échauffement d'un tel moteur est principalement dû à la puissance dissipée dans le bobinage d'induit. Celui-ci étant placé dans le rotor, la mise en place d'une sonde thermique dans le bobinage pour mesurer la température, comme il est pratiqué dans les moteurs bobinés au stator, nécessite des contacts glissants sur des bagues, d'où un surcoût important.

Il est bien sûr possible de positionner une sonde thermique sur le stator du moteur, et de majorer la valeur mesurée par un coefficient établi par des lois de simulation ou par des expériences. Cependant, une telle solution valable en régime établi, conduit à des résultats largement faussés en régime transitoire. La sonde thermique ainsi placée mesure des variations de températures après que celles-ci se sont produites au niveau du rotor, du fait notamment de l'entrefer existant entre le rotor et le stator. Ce décalage temporel entre le phénomène se produisant au niveau du rotor et sa mesure au niveau du stator nécessite de considérer une marge de sécurité qui a pour conséquence de provoquer dans certains cas des commandes de coupure d'alimentation du moteur alors que son rotor n'a pas encore atteint une température critique. Ce problème devient particulièrement critique dans le cas où le fonctionnement du moteur est intermittent. On trouve aussi le problème inverse d'une remise en service prématurée de l'alimentation du moteur : en effet, du fait de son contact avec l'extérieur, le stator se refroidit plus rapidement que le rotor.

Il est connu des documents US 5,296,789 et EP 0 587 352, d'utiliser des moyens de mesure de la température des composants de commande de l'alimentation d'un moteur électrique afin de protéger ceux-ci contre une détérioration due à un échauffement excessif. De tels moyens sont utilisés dans des applications différentes de celle de la présente invention dans lesquelles les éléments les plus exposés au risque de surchauffe sont les composants de commande de l'alimentation.

Il est également connu du document US 5,123,081 un véhicule comprenant un moteur électrique. Le moteur et les composants de commande de son alimentation sont équipés de sondes thermiques pour déterminer leurs températures respectives afin de commander l'alimentation électrique de façon à éviter leur détérioration. La sonde thermique de mesure de la température du moteur est placée sur le boîtier du moteur.

On connaît de la demande DE 34 22 485 un dispositif de commande de l'alimentation d'un moteur à courant continu. Ce dispositif comprend un capteur de courant en liaison thermique avec un capteur de température de manière à simuler le fonctionnement du moteur. Ce dispositif présente des inconvénients. II impose notamment de positionner une résistance en série avec le moteur et de réaliser une liaison thermique entre celle-ci et un capteur de température, ce qui n'est pas évident étant donné les géométries des composants habituellement utilisées.

Le but de l'invention est de fournir un actionneur et un procédé de détermination de la température d'un moteur permettant de pallier aux inconvénients précités et permettant d'apporter des améliorations par rapport aux actionneurs connus de l'art antérieur. L'invention propose en particulier un actionneur ayant une structure électrique et thermique simple et permettant de simuler le comportement thermique d'un moteur électrique.

L'actionneur selon l'invention est caractérisé par la partie caractérisante de la revendication 1.

Différents modes de réalisation de l'actionneur sont définis par les revendications dépendantes 2 à 6.

La figure 1 représente un schéma d'un dispositif de volet roulant comprenant un premier mode de réalisation d'un actionneur selon l'invention.

La figure 2 représente un schéma d'un premier mode de réalisation d'un dispositif auxiliaire permettant la détermination de la température d'un élément du moteur.

La figure 3 représente un schéma d'un deuxième mode de réalisation d'un dispositif auxiliaire permettant la détermination de la température d'un élément du moteur.

La figure 4 représente un mode de réalisation de l'invention appliqué au premier mode ou au deuxième mode de réalisation d'un dispositif auxiliaire.

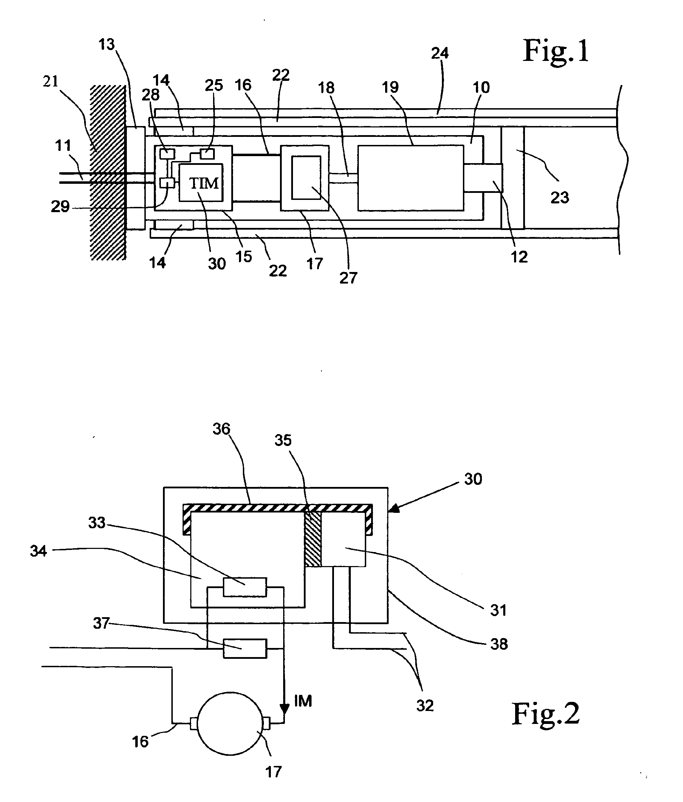

Le dispositif 1 représenté à la figure 1 est un dispositif de volet roulant. Il comprend un actionneur électrique 10, destiné à la manoeuvre d'un élément mobile 24 du dispositif. Cet actionneur est par exemple contenu dans un tube d'enroulement 22, sur lequel est enroulé l'élément mobile 24 à manoeuvrer.

Un arbre de sortie 12 de l'actionneur 10 entraîne une roue 23 en prise avec l'arbre de sortie 12 et la partie interne du tube d'enroulement 22. L'actionneur est fixé à la structure 21 d'un bâtiment par l'intermédiaire d'une pièce 13 de fixation et le tube d'enroulement est guidé en rotation à proximité de la pièce de fixation 13. Une bague 14 montée serrée sur l'actionneur et glissante par rapport au tube 22 assure par exemple ce guidage en rotation.

Dans ces conditions, l'actionneur se trouve dans un environnement totalement confiné, provoquant, lorsqu'il est alimenté électriquement, un échauffement de type quasi-adiabatique. Ces effets peuvent être encore accrus si, comme c'est le cas pour les volets roulants, l'ensemble est à son tour disposé dans un caisson servant à la fois à masquer la partie enroulée de l'élément mobile et à l'isolation thermique du local en évitant soigneusement les entrées d'air par le sommet du volet.

L'actionneur 10 comprend un moteur 17 attaquant, par l'intermédiaire d'un arbre 18, un réducteur 19 dont la sortie constitue un arbre de sortie 12. Le moteur est de type à courant continu, à aimants permanents et à rotor 27 bobiné, constituant le bobinage d'induit. Le moteur comprend des balais et un collecteur. Il est connecté par deux connexions d'induit 16 à un circuit électronique 15 de commande de son alimentation. Ce circuit électronique 15 comprend au moins un dispositif auxiliaire 30 permettant de déterminer la température du rotor 27 du moteur, une unité logique de traitement 29 et une mémoire 28. Ce circuit électronique 15 est notamment destiné à assurer la protection thermique du moteur. Il comprend à cet effet un relais 25 commandant l'alimentation du moteur. Comme il est connu de l'homme du métier, le circuit électronique 15 peut également comprendre un dispositif récepteur d'ordres, par exemple par radiofréquences ou par courants porteurs, et/ou un moyen de détection d'obstacles ou de butées, par exemple par analyse du courant d'alimentation du moteur. Le circuit électronique peut aussi contenir un moyen de comptage de la rotation du tube d'enroulement 22 permettant la mesure précise de la position de l'élément mobile 24 entraîné par l'actionneur. Le circuit électronique 15 peut également comporter un relais dont un contact à ouverture provoque la mise en court-circuit des deux connexions d'induit 16 quand le relais n'est pas alimenté. Un tel relais permet le blocage du rotor 27 en absence d'alimentation. Ce circuit électronique est alimenté par une ligne d'alimentation électrique 11.

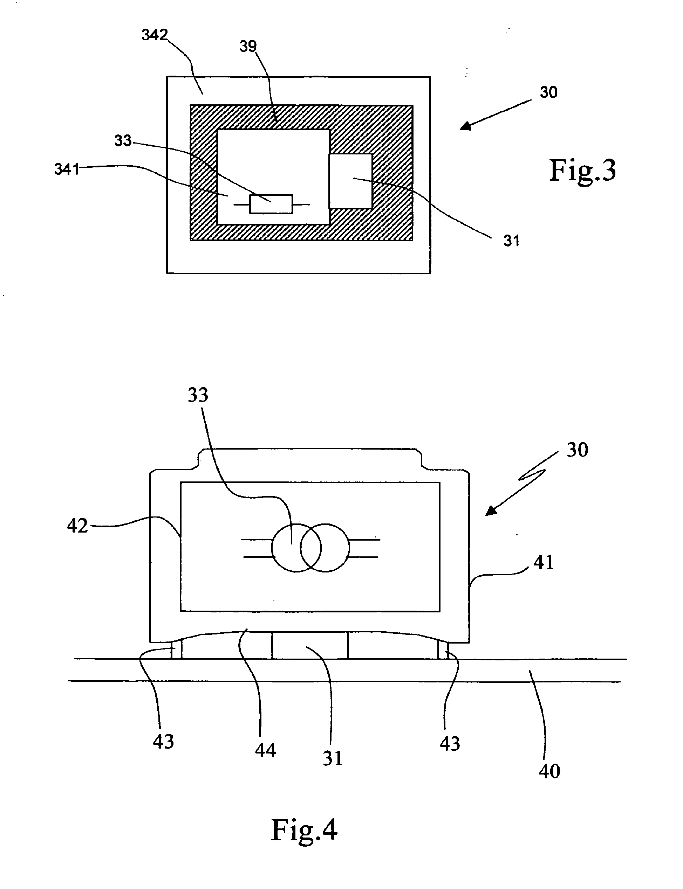

La ligne d'alimentation électrique 11 est raccordée au réseau électrique commercial alternatif, par exemple 230 V 50 Hz, ou 120V 60 Hz. Le circuit électronique 15 comprend un convertisseur alternatif/continu, comprenant un transformateur 42 (représenté à la figure 4) et un redresseur.

La figure 2 représente le principe du dispositif image constituant le dispositif auxiliaire. Il comprend une sonde thermique 31 délivrant entre deux sorties de signal 32 une tension représentative de la température de sa surface sensible. Alternativement, la sonde thermique peut également délivrer un courant image de la température (ou tout autre paramètre électrique représentatif de la température, par exemple une fréquence).

Le dispositif image comprend également un élément résistif 33 qui est parcouru par un courant image du courant IM alimentant l'induit du moteur. Pour ce faire, cet élément résistif 33 est branché en parallèle avec un élément de dérivation 37, ces deux éléments étant branchés en série avec le moteur. L'élément de dérivation peut également être supprimé. Dans ce cas, le courant traversant l'élément résistif 33 est le même que celui qui alimente le moteur. De cette manière, l'élément résistif 33 dissipe une puissance thermique image de la puissance dissipée par effet Joule dans l'induit du moteur 17.

L'élément résistif 33 est noyé dans un volume solide 34, par exemple réalisé en alliage d'aluminium (zamac), en acier, en matière plastique chargée. Préférentiellement, ce volume solide 34 présente une capacité calorifique proportionnelle à celle du rotor du moteur 17. Ainsi, toutes choses égales par ailleurs, le dispositif auxiliaire comprend un volume solide double de celui servant à déterminer la température d'un rotor de masse M, s'il sert à déterminer la température d'un rotor de masse 2xM.

La sonde thermique 31 est par exemple plaquée contre le volume solide 34, par un moyen élastique de fixation 36, tel qu'un clip élastique. Une couche 35 assure la qualité du contact thermique entre la sonde de température 31 et le volume solide 34, cette couche 35 étant par exemple réalisée par un film de graisse silicone.

Du fait de la capacité calorifique constituée par le volume solide 34, recevant une puissance thermique image de celle dissipée dans le moteur, les montées en température et les décroissances de température, du volume solide suivent celles du moteur, à un facteur d'échelle près. Les variations de température du volume solide sont sensiblement homothétiques à celles du rotor.

Par simple étalonnage, réalisé en phase de conception de l'actionneur, on détermine alors les seuils de tension (respectivement de courant, de fréquence ou autre) délivrée par la sonde thermique au-delà desquels une action particulière doit être engagée, comme par exemple cesser d'alimenter le moteur.

Un paramètre d'accord supplémentaire permet d'ajuster si besoin l'image de la température du rotor du moteur à sa valeur effective. En effet, la sonde thermique 31, le moyen de fixation 36 et le volume solide 34 peuvent être disposés dans une enveloppe 38 dont la résistance thermique limite les échanges avec l'air ambiant. Par exemple, cette enveloppe est constituée par un boîtier en matière plastique, ouvert sur une face et venant recouvrir le circuit imprimé là où sont disposés les éléments du dispositif auxiliaire.

Bien entendu, il est possible d'affiner l'accord en reproduisant plus précisément encore la structure thermique équivalente à celle du moteur 17, avec par exemple un deuxième mode de réalisation du dispositif auxiliaire comprenant deux volumes solides imbriqués 341 et 342, comme représenté sur la figure 3.

L'élément résistif 33 est noyé dans un premier volume solide 341 représentatif de la capacité calorifique du moteur. Ce premier volume solide est entouré par un deuxième volume solide 342 représentatif de la capacité calorifique du stator. Les deux volumes solides sont séparés par un isolant thermique 39 représentant l'entrefer rotor-stator. Cet isolant peut par exemple être constitué par de l'air, le volume solide 341 étant maintenu dans le volume solide 342 par des supports réalisés en matériau solide isolant. La sonde thermique est alors fixée contre la surface du premier volume solide 341. Cependant, l'expérience montre que, pour des applications de faible coût, il est possible d'obtenir une sécurité satisfaisante avec le dispositif plus simple décrit en relation avec la figure 2.

Dans le cas où la ligne d'alimentation 11 est reliée à une source de tension alternative, un mode de réalisation préféré consiste à utiliser le transformateur d'alimentation 42 comme dispositif auxiliaire.

Ce mode de réalisation d'un dispositif auxiliaire selon l'invention est représenté à la figure 4.

Les deux bobinages primaire et secondaire du transformateur constituent alors l'élément résistif 33. En effet, ces bobinages sont chacun parcourus par un courant dont la valeur efficace est égale ou proportionnelle à celle du courant d'alimentation du moteur. Il est admis dans ce cas que la puissance nominale du moteur est supérieure, voire très supérieure, à la puissance absorbée par les autres composants du circuit électronique 15. Ainsi, la valeur efficace du ou des courants utilisés pour l'échauffement du dispositif auxiliaire 30 est une image fidèle de la valeur efficace du courant alimentant l'induit du moteur.

Si le degré de précision recherché n'est pas trop important, l'invention supporte que la valeur efficace du ou des courants se limite à une image approchée. Par exemple, il est admissible dans certains modes de réalisation qu'une composante alternative due à la charge et à la décharge d'un condensateur de filtrage de la tension aux bornes du moteur vienne se superposer à la composante d'alimentation du moteur. Un écart de 20% des valeurs efficaces est alors d'autant plus admissible que la composante alternative du courant de filtrage tend à augmenter avec l'intensité absorbée par le moteur.

Une réalisation industrielle particulièrement simple de l'invention consiste à disposer sur un circuit imprimé 40 la sonde thermique 31 (sous forme de composant à montage de surface CMS-SMD) dans une étape de positionnement automatique des composants à montage de surface. Une fois ces composants soudés, on dispose une feuille de mica sur la sonde thermique et on procède à la mise en place du transformateur par insertion manuelle. Le positionnement du transformateur est tel qu'un bobinage vient en contact thermique avec la sonde thermique. On procède alors à la soudure des pattes 43 du transformateur sur le circuit imprimé 40.

Les transformateurs de type moulé habituellement utilisés pour l'alimentation des actionneurs de faible puissance présentent une face inférieure 44 concave permettant de loger la sonde thermique entre le transformateur 42 et le circuit imprimé 40.

La sonde de température peut être implantée, sur le circuit imprimé, sous le transformateur, plus ou moins au centre de ce dernier afin qu'elle subisse une plus ou moins grande influence des échanges thermiques avec l'extérieur de manière à mieux simuler les variations thermiques du moteur.

Comme décrit sur la figure 3, il est possible de simuler mieux encore l'échauffement du moteur par ajout d'un deuxième volume solide 342 autour du premier volume solide 341, qui est alors constitué par le volume solide 41 comprenant le transformateur 42.

Bien que l'actionneur décrit précédemment soit destiné à la manoeuvre d'un volet roulant, un actionneur selon l'invention peut être destiné à la manoeuvre de tout autre élément de fermeture, d'occultation ou de protection solaire et notamment à la manoeuvre de stores, portes de garage, portails, écrans de projection, portes ou fenêtres.

## Revendications

1. Actionneur (10) pour la manoeuvre d'un élément (24) de fermeture, d'occultation ou de protection solaire ou d'un écran comprenant un moteur électrique (17) à courant continu alimenté via un transformateur (42) et un dispositif (15) de commande de l'alimentation électrique du moteur (17) comprenant des moyens (30) de détermination de la température d'un élément particulier (27) du moteur, **caractérisé en ce que** les moyens (30) de détermination de la température de l'élément particulier (27) du moteur comprennent une sonde thermique (31) en contact thermique avec le transformateur.

2. Actionneur (10) selon la revendication 1, **caractérisé en ce que** les variations de température du transformateur sont sensiblement homothétiques à celles de l'élément particulier (27) du moteur et **en ce que** la sonde thermique (31) mesure la température du transformateur.

3. Actionneur (10) selon l'une des revendications précédentes, **caractérisé en ce que** la sonde thermique est en contact thermique avec un bobinage du transformateur.

4. Actionneur selon l'une des revendications précédentes, **caractérisé en ce que** le moteur (17) est un moteur à courant continu à rotor bobiné et **en ce que** l'élément particulier (27) du moteur est le rotor (27).

5. Actionneur (10) selon l'une des revendications précédentes, **caractérisé en ce que** le dispositif (15) de commande de l'alimentation électrique du moteur comprend des moyens (25) pour couper l'alimentation du moteur en fonction de la température des moyens (30) de détermination de la température de l'élément particulier (27).

6. Actionneur (10) selon l'une des revendications précédentes, **caractérisé en ce qu'**un deuxième volume solide (342) est disposé autour d'un premier volume solide (341) constitué par le boîtier (41) du transformateur (42).

## Claims

1. Actuator (10) for operating a closing, blackout, or sun-protective element (24) or a screen, comprising a direct current electric motor (17) supplied via a transformer (42) and a device (15) for controlling the electrical supply of the motor (17) comprising means (30) for determining the temperature of a specific element (27) of the motor, **characterized in that** the means (30) for determining the temperature of the specific element (27) of the motor comprise a temperature sensor (31) in thermal contact with the transformer.

2. Actuator (10) as set forth in claim 1, **characterized in that** the variations in the temperature of the transformer are substantially homothetic to those of the specific element (27) of the motor and **in that** the temperature sensor (31) measures the temperature of the transformer.

3. Actuator (10) as set forth in one of the preceding claims, **characterized in that** the temperature sensor is in thermal contact with a winding of the transformer.

4. Actuator as set forth in one of the preceding claims, **characterized in that** the motor (17) is a direct current motor having a wound rotor and **in that** the specific element (27) of the motor is the rotor (27).

5. Actuator (10) as set forth in one of the preceding claims, **characterized in that** the device (15) for controlling the electrical supply of the motor comprises means (25) for cutting the supply of the motor depending on the temperature of the means (30) for determining the temperature of the specific element (27).

6. Actuator (10) as set forth in one of the preceding claims, **characterized in that** a second solid volume (342) is arranged around a first solid volume (341) consisting of the housing (41) of the transformer (42).

## Patentansprüche

1. Stellglied (10) zum Manövrieren eines Verschluss-, Abdeckungs- oder Sonnenschutzelements (24) oder eines Schirms, das einen elektrischen Gleichstrommotor (17), der mittels eines Transformators (42) gespeist wird, und eine Vorrichtung (15) zur Steuerung der Stromzufuhr des Motors (17) umfasst, die Mittel (30) zur Bestimmung der Temperatur eines bestimmten Elements (27) des Motors umfasst, **dadurch gekennzeichnet, dass** die Mittel (30) zur Bestimmung der Temperatur des bestimmten Elements (27) des Motors einen Temperaturfühler (31) umfassen, der mit dem Transformator in Wärmekontakt steht.

2. Stellglied (10) nach Anspruch 1, **dadurch gekennzeichnet, dass** die Schwankungen der Temperatur des Transformators mit denen des bestimmten Elements (27) des Motors im Wesentlichen homothetisch sind und dass der Temperaturfühler (31) die Temperatur des Transformators misst.

3. Stellglied (10) nach einem der vorhergehenden Ansprüche, **dadurch gekennzeichnet, dass** der Temperaturfühler mit einer Wicklung des Transformators in Wärmekontakt steht.

4. Stellglied nach einem der vorhergehenden Ansprüche, **dadurch gekennzeichnet, dass** der Motor (17) ein Gleichstrommotor mit gewickeltem Läufer ist und dass das bestimmte Element (27) des Motors der Läufer (27) ist.

5. Stellglied (10) nach einem der vorhergehenden Ansprüche, **dadurch gekennzeichnet, dass** die Vorrichtung (15) zur Steuerung der Stromzufuhr des Motors Mittel (25) zum Unterbrechen der Stromzufuhr des Motors in Abhängigkeit von der Temperatur der Mitteln (30)) zur Bestimmung der Temperatur des bestimmten Elements (27) umfasst.

6. Stellglied (10) nach einem der vorhergehenden Ansprüche, **dadurch gekennzeichnet, dass** ein zweites Festvolumen (342) um ein erstes Festvolumen (341) herum angeordnet ist, das aus dem Gehäuse (41) des Transformators (42) besteht.
